# EUROPÄISCHE PATENTSCHRIFT

(11) **EP 2 978 522 B1**
(45) Veröffentlichungstag und Bekanntmachung des Hinweises auf die Patenterteilung: **27.09.2023**
(21) Anmeldenummer: 14718925.2
(22) Anmeldetag: 27.03.2014
(51) Int. Cl.: B01J 19/12

(54) **VERFAHREN ZUR INFRAROTLICHTINDUZIERTEN AUSBEUTEOPTIMIERUNG VON CHEMISCHEN REAKTIONEN DURCH SCHWINGUNGSANREGUNG**
METHOD FOR THE INFRARED-LIGHT-INDUCED YIELD OPTIMIZATION OF CHEMICAL REACTIONS BY MEANS OF VIBRATION EXCITATION
PROCÉDÉ D'OPTIMISATION INDUITE PAR LA LUMIÈRE INFRAROUGE DU RENDEMENT DE RÉACTIONS CHIMIQUES PAR EXCITATION D'OSCILLATION

(30) Priorität: 27.03.2013 DE 102013205462
(43) Veröffentlichungstag der Anmeldung: 03.02.2016
(73) Patentinhaber: Freie Universität Berlin, 14195 Berlin (DE)
(72) Erfinder: HEYNE, Karsten, 14574 Beelitz, OT Buchholz (DE); KÖSSL, Florian, 10777 Berlin (DE); KOZICH, Valeri, 12351 Berlin (DE)
(74) Vertreter: Maikowski & Ninnemann Patentanwälte Partnerschaft mbB
(86) Internationale Anmeldenummer: PCT/EP2014/056220
(87) Internationale Veröffentlichungsnummer: WO 2014/154834

(56) Entgegenhaltungen:
- EP-A1- 0 658 373
- US-A- 4 124 466
- SNELS M ET AL: "IR dissociation of dimers of high symmetry molecules: SF6, SiF4 and SiH4", CHEMICAL PHYSICS, NORTH-HOLLAND, NL, Bd. 109, Nr. 1, 1. November 1986 (1986-11-01), Seiten 67-83, XP026787480, ISSN: 0301-0104, DOI: 10.1016/0301-0104(86)80185-9 [gefunden am 1986-11-01]
- KUZE H ET AL: "Isotope-selective photodissociation of ozone molecules induced by infrared laser irradiation", CHEMICAL PHYSICS LETTERS, ELSEVIER BV, NL, Bd. 455, Nr. 4-6, 10. April 2008 (2008-04-10), Seiten 156-158, XP026052022, ISSN: 0009-2614, DOI: 10.1016/J.CPLETT.2008.02.080 [gefunden am 2008-02-29]
- CATALANO E ET AL: "Infrared Laser Single Photon Absorption Reaction Chemistry in the Solid State. Reactions of Nitrogen Oxides with Sulfur Hexafluoride", JOURNAL OF PHYSICAL CHEMISTRY, Bd. 84, Nr. 13, Juni 1980 (1980-06), Seiten 1686-1694, XP002726730, DOI: 10.1021/j100450a005
- STENSITZKI TILL ET AL: "Acceleration of a ground-state reaction by selective femtosecond-infrared-laser-pulse excitation", NATURE CHEMISTRY, [Online] vol. 10, no. 2, 1 February 2018 (2018-02-01), pages 126-131, XP055894520, London ISSN: 1755-4330, DOI: 10.1038/nchem.2909 Retrieved from the Internet: URL:http://www.nature.com/articles/nchem.2 909> [retrieved on 2022-02-23]
- SUK KYOUNG LEE ET AL: "A Reaction Accelerator: Mid-infrared Strong Field Dissociation Yields Mode-Selective Chemistry", J. PHYS. CHEM. LETT, vol. 3, no. 18, 27 August 2012 (2012-08-27), pages 2541-2547, XP001599017, DOI: 10.1021/JZ301038B [retrieved on 2012-08-27]

## Beschreibung

Die Erfindung betrifft ein Verfahren zur infrarotlichtinduzierten Ausbeuteoptimierung von chemischen Reaktionen, nämlich Synthesereaktionen, gemäß dem Oberbegriff des Anspruchs 1 sowie die Verwendung von Infrarotlichtimpulsen gemäß dem Oberbegriff des Anspruchs 15.

Aus der WO 2006/069448 A2 ist ein Verfahren zur Abtragung von Material mittels Infrarotlicht-Laserimpulsen bekannt, bei dem die Energie des Infrarotlichtes in Wärmenergie des abzutragenden Materials umgewandelt wird. Dabei werden innerhalb des abzutragenden Materials überhitzte Stellen erzeugt, in denen die Temperatur über dem Verdampfungspunkt zumindest einer Komponente des abzutragenden Materials liegt.

Aus der WO 2007/082861 A1 ist ein Verfahren zur Synthese von Produktmolekülen bekannt, bei denen durch Laserimpulse aus sichtbarem Licht Energie in zu reagierende Eduktmoleküle eingebracht wird, wobei die Reaktion der Eduktmoleküle zu Produktmolekülen auf einer Oberfläche stattfindet, an der die Eduktmoleküle zumindest teilweise adsorbiert werden. Bei der Einbringung von sichtbarem Licht wird eine elektronische Anregung induziert.

Aus der DE 10 2011 050 894 A1 ist ein Verfahren zur Polymerisierung von Monomer- und/oder Oligomereinheiten durch Infrarotlichtimpulse bekannt, bei dem insbesondere gechirpte Infrarotlichtimpulse verwendet werden, um höhere Schwingungsanregungen zu ermöglichen. Dabei finden in einem Molekül gleichzeitig Anregungen mehrerer kohärenter Schwingungsquanten einer Schwingungsmode statt. Diesem Verfahren liegen Multiphotonenprozesse zugrunde.

Es ist beispielsweise aus C.J. Hawker, Chem. Rev. 2001, Seiten 3661-3688 bekannt, dass durch elektronische Anregung mit Wellenlängen kürzer als 2000 nm, insbesondere 1000 nm, Radikale in einigen organischen Molekülen erzeugt werden, die chemische Reaktionen induzieren können.

Weiterhin ist beispielsweise aus R. Bonnett, Chemical Society Reviews, 1995, 24(1), Seiten 19-33 bekannt, dass durch elektronische Anregung im Wellenlängenbereich kürzer als etwa 1200 nm einige organische Moleküle, insbesondere der Molekülklassen der Porphyrine, Pthalocyanine, Corrole, Chlorine, Pheophorbide und der Tetrapyrrole, durch Tripletannihilation reaktiven Singlet Sauerstoff erzeugen, der chemische Reaktionen induziert.

Ebenso ist beispielsweise aus A. Zewail, J. Phys. Chem. A 2000, 104, Seiten 5660-5694; R.N. Zare, Science 1998, 279, Seiten 1875-1879; "Analysis and Control of Ultrafast Photoinduced Reactions", Springer Series in Chemical Physics 87, 2007, Herausgeber: Oliver Kühn und Ludger Wöste bekannt, dass durch elektronische Anregung mit kohärenten Lichtimpulsen, die eine Quanteninterferenz von Schwingungsmoden erzeugen, chemische Reaktionen, insbesondere Dissoziationsreaktionen, im elektronisch angeregten Zustand gesteuert werden können. Diese Steuerung chemischer Reaktionen war auch Gegenstand des Sonderforschungsbereichs 450 "Analyse und Kontrolle lichtinduzierter chemischer Reaktionen".

Im Gegensatz dazu gibt für chemische Ladder-climbing-Dissoziationsreaktionen durch Schwingungsanregung mittels Infrarotlichtimpulsen nur wenige Beispiele (T. Witte et al. J. Chem. Phys. (2003), 118, Seiten 2021-2024). Hierbei findet in einem Molekül gleichzeitig die Anregung mehrerer kohärenter Schwingungsquanten einer Schwingungsmode im elektronischen Grundzustand statt. Dazu ist die Absorption mehrerer Photonen durch das einzelne Molekül notwendig.

Aus D. Zeidler et al. J. Chem. Phys. (2002), 116, Seiten 5231-5235] ist ein Experiment zur optimalen Kontrolle der Grundzustandsdynamik vorgestellt worden. Dabei wird mit sichtbarem Licht ein stimulierter Ramanprozess über eine computergesteuerte Feedback-Schleife so optimiert, dass die kohärenten ramanaktiven Grundzustandsschwingungen in ihrer Phase manipuliert werden können. Dadurch können in einem Zeitbereich von etwa einer Pikosekunde (ps) kohärente Wellenpakete erzeugt werden, deren relative Phase zueinander veränderbar ist. Dies ist nur möglich, solange die Dephasierungszeit, die zwischen 0.1 ps und etwa 1.5 ps liegt, nicht vorüber ist.

In der Veröffentlichung von N.C. Strandwitz et al., J. Am. Chem. Soc, 2008, 130, Seiten 8280-8288 ist ein Verfahren beschrieben worden, in dem die Effizienz der Photopolymerisierung - initiiert durch elektronische Anregung - durch die Anwesenheit eines Koinitiators um etwa 5 % erhöht wird. In dieser Arbeit wurden Ein- und Zweiphotonenabsorptionsprozesse verwendet, um CdS-Halbleiter-Quantenpunkte elektronisch anzuregen und Radikale zu erzeugen.

Es ist auch von der theoretischen Möglichkeit berichtet worden, durch kohärente Anregung mit Lichtimpulsen im sichtbaren Spektralbereich kohärente ramanaktive Grundzustandsschwingungen anzuregen, die einen chemischen Reaktionsweg öffnen können.

Bis jetzt ist kein Verfahren beschrieben worden und keine Untersuchung bekannt, bei der durch einphotonische Schwingungsanregung direkt oder indirekt eine Reaktionskoordinate angeregt oder aktiviert wird und somit eine chemische Reaktion bzw. chemische Synthese gezielt gesteuert und/oder beschleunigt wird.

Aus Catalano et al. (Catalano und Barletta: Infrared Laser Single Photon Absorption Reaction Chemistry in the Solid State. Reactions of Nitrogen Oxides with Sulfur Hexafluoride", J. Phys. Chem. 84 (1980), 1686-1694) ist ein Verfahren zur Benutzung von Infrarot-Impulsen bekannt.

Der vorliegenden Erfindung liegt die Aufgabe zugrunde, ein gegenüber den aus dem Stand der Technik bekannten Verfahren vereinfachtes Verfahren zur lichtinduzierten Ausbeuteoptimierung bei bestimmten chemischen Reaktionen anzugeben.

Diese Aufgabe wird durch ein Verfahren zur infrarotlichtinduzierten Ausbeuteoptimierung von chemischen Reaktionen mit den Merkmalen des Anspruchs 1 gelöst. Bei einem derartigen Verfahren erfolgt ein Energieeintrag in mindestens ein Edukt, das einer chemischen Reaktion unterzogen wird, mittels Infrarotlichtimpulsen. Die Infrarotlichtimpulse weisen eine mittlere Wellenlänge im Bereich von 2000 bis 100000 nm, insbesondere 3000 bis 80000 nm, insbesondere 5000 bis 50000 nm, insbesondere 10000 bis 40000 nm und ganz besonders 20000 bis 30000 nm auf.

Bei der chemischen Reaktion handelt es sich um eine Reaktion, bei der ein Produkt gebildet wird, dessen Summenformel nicht der Summenformel des Edukts entspricht. Das heißt, Restrukturierungsreaktionen wie etwa Isomerisierungsreaktionen oder Tautomerisierungsreaktionen, bei denen sich zwar die Molekülstruktur, nicht aber die molekulare Masse der betrachteten Substanz ändert, fallen nicht unter den Begriff "chemische Reaktion" im hier verwendeten Sinne.

Die Ausbeuteoptimierung beruht zum überwiegenden Teil (also zu mehr als 50 %, insbesondere zu mehr als 60 %, insbesondere zu mehr als 70 %, insbesondere zu mehr als 80 %, insbesondere zu mehr als 90 %, insbesondere zu mehr als 95 %, insbesondere zu mehr als 98 % und ganz besonders zu mehr als 99 %) nicht auf einer thermischen Erwärmung des Edukts.

Die infrarotlichtinduzierte Anregung führt nur zu einer geringfügigen Erwärmung der Edukte im thermischen Gleichgewicht (wenige Grad Celsius). Laut Boltzmann-Statistik und Arrhenius-Gesetz reicht diese Erwärmung nicht aus, um die gesteigerte Reaktionsausbeute um vorzugsweise mehr als zumindest 10 % zu erklären. Im thermischen Gleichgewicht ist die Gesamtenergie des einzelnen Moleküls gemäß der Boltzmann-Statistik auf seine 3N-6 (bzw. 3N-5 für lineare Moleküle) Schwingungsfreiheitsgrade aufgeteilt. Absorbiert ein Molekül mit N = 30 Atomen 2600 cm-' Energie eines Photons, so wird die Energie auf 84 Schwingungsfreiheitsgrade verteilt. Somit erhöht sich im Durchschnitt die Energie jeder einzelnen Schwingungsmode um etwa 31 cm⁻¹, was weniger als etwa 10 % der kinetischen Energie bei Raumtemperaturenergie entspricht. Dies entspricht nur einer minimalen Temperaturerhöhung um etwa 3 Kelvin.

Das Verfahren zeichnet sich dadurch aus, dass die Infrarotlichtimpulse eine feste Wellenlänge aufweisen und der Energieeintrag in das Edukt mittels Schwingungsanregung durch einen Einphotonenprozess erfolgt.

Mit anderen Worten ausgedrückt, beruht das beanspruchte Verfahren auf der infrarotlichtinduzierten Schwingungsanregung einer direkten oder indirekten Reaktionskoordinate im elektronischen Grundzustand der chemischen Reaktion, wodurch kurzzeitig in einer Nichtgleichgewichtsdynamik der aktivierte Zustand des Edukts oder der Edukte (auch als aktivvierter Komplex bezeichnet) erreicht wird, und die Wahrscheinlichkeit der chemischen Reaktion deutlich erhöht wird. Ohne die infrarotlichtinduzierte Schwingungsanregung ist die Wahrscheinlichkeit, dass der aktivierte Komplex - aufgrund der thermischen Energieverteilung - gebildet wird, deutlich kleiner.

Bevor auf weitere Details und Ausgestaltungen des beanspruchten Verfahrens eingegangen wird, sollen zum besseren Verständnis des beanspruchten Verfahrens und des oben zitierten Stands der Technik einige Definitionen erfolgen.

Definition 1: Infrarotlichtimpulse sind Lichtimpulse im Wellenlängenbereich von 2000 nm bis 100000 nm (vgl. beispielsweise B.H. Bransden & C.J.Joachain "Physics of Atoms and Molecules", Haaken,Wolf "Molekülphysik und Quantenchemie" 2. Auflage). Der Lichtimpuls ist im Grenzfall durch ein einzelnes Photon charakterisiert.

Definition 2: Eine elektronische Anregung ist eine Anregung durch Lichtimpulse, die den Besetzungszustand der elektronischen Wellenfunktionen verändert. Elektronische Anregungen liegen fast immer im Wellenlängenbereich kürzer als 1500 nm (vgl. beispielsweise B.H. Bransden & C.J.Joachain "Physics of Atoms and Molecules", Haaken,Wolf "Molekülphysik und Quantenchemie" 2. Auflage, Demtröder "Laserspektroskopie" 4. Auflage).

Definition 3: Eine Schwingungsanregung ist eine Anregung, bei der ein Lichtimpuls bzw. ein Photon im infraroten Spektralbereich eine infrarot-aktive Schwingung anregt und damit die Besetzungszahl des Schwingungsquantes des Moleküls erhöht (vgl. beispielsweise, B.H. Bransden & C.J.Joachain "Physics of Atoms and Molecules", Haaken,Wolf "Molekülphysik und Quantenchemie" 2. Auflage).

Definition 4: Dissoziationsreaktionen sind Reaktionen, bei denen das Produkt nach der Reaktion eine geringere molare Masse aufweist als das Edukt vor der Reaktion.

Definition 5: Ladder-climbing-Dissoziationsreaktionen sind Dissoziationsreaktionen, die dadurch induziert werden, dass eine schnelle sequentielle Absorption von mehreren kohärenten Photonen erfolgt, die dazu führt, dass die höher schwingungsangeregte Bindung in den antibindenden Zustand überführt wird und somit bricht. Dazu sind sehr hohe Intensitäten notwendig. Dieser Prozess entspricht keiner ansonsten ablaufenden chemischen Reaktion.

Definition 6: Eine Synthesereaktion ist eine Reaktion von mindestens einem Edukt, meistens aber zwischen mehr als einem Edukt, bei der ein neues Molekül (Produkt) entsteht, dessen molare Masse größer ist als die Masse eines der Edukte. Das Produkt enthält dabei molekulare Bestandteile von mehr als einem Edukt, wenn mehr als ein Edukt eingesetzt wird.

Definition 7: Eine Restrukturierungsreaktion, ist eine Reaktion, bei der die molare Masse eines Moleküls nicht geändert wird, sich aber durch die räumliche Anordnung der Atome zueinander im Molekül unterscheidet (z.B. CH₃NC→ CH₃CN).

Definition 8: Nichtgleichgewichtsdynamik ist die Dynamik eines Moleküls zu dem Zeitpunkt, in dem die Schwingungszustände nicht nach der Boltzmann-Statistik besetzt sind. Dies ist der Fall, wenn eine Schwingungsmode angeregt wird und die Schwingungsenergie dieser Schwingungsmode noch nicht auf alle Schwingungsmoden des Moleküls verteilt ist. Die Boltzmann-Statistik liegt vor, wenn die Moleküle im thermischen Gleichgewicht sind bzw. durch eine Temperatur beschrieben werden können. Chemische Reaktionen, die durch die Temperatur getrieben werden, finden im thermischen Gleichgewicht statt. Dies gilt auch für exotherme und endotherme Reaktionen.

Definition 9: Von der Temperatur eines Moleküls kann man nur dann sprechen, wenn alle Schwingungsmoden nach der Boltzmann-Statistik besetzt sind.

Definition 10: Nach einer Schwingungsanregung und solange die Schwingungsmoden nicht nach der Boltzmann-Statistik auf alle Schwingungsmoden des Moleküls verteilt sind, kann man nur von einer Pseudotemperatur sprechen. Die Pseudotemperatur ist aus dem Verhältnis der Besetzungszahlen von Antistokes- und Stokessignalen berechenbar (vgl. hierzu Kozich et al. Chem. Phys. Lett. (2004), 399, 484-489; Kozich et al. J. Chem. Phys. (2003), 118, 1808-1814).

Definition 11: Die Reaktionskoordinate ist die Größe, entlang derer eine Änderung induziert werden muss, um zum aktivierten Komplex zu kommen. Mit anderen Worten ausgedrückt, handelt es sich bei der Reaktionskoordinate um eine abstrakte eindimensionale Koordinate, die den Fortschritt entlang des Reaktionsweges darstellt. Für Reaktionen im elektronischen Grundzustand - also die meisten chemischen Reaktionen - ist die Reaktionskoordinate durch eine Schwingung bzw. die Kombination von Schwingungen beschreibbar. Ist der aktivierte Komplex gebildet, können die Produkte gebildet werden bzw. kann die chemische Reaktion erfolgen. Zur Bildung des aktivierten Komplexes muss die Aktivierungsenergie zugeführt werden. Durch Zuführung der Aktivierungsenergie wird die Potentialbarriere für die Reaktion überwunden (vgl. hierzu P.W: Atkins, Physical Chemistry 5. Auflage, Oxford University Press).

Das erfindungsgemäß beanspruchte Verfahren unterscheidet sich von aus dem Stand der Technik bekannten Verfahren dadurch, dass beim vorliegenden Verfahren nur genau eine Schwingungsmode angeregt wird, und zwar durch einen Einphotonenprozess. Bislang war man davon ausgegangen, dass derartige Einphotonenprozesse nur für Restrukturierungsreaktionen, wie etwa eine Isomerisierung oder eine Tautomerisierung, einsetzbar sind, da die Energie, die mittels eines Einphotonenprozesses auf ein Molekül übertragen werden kann, vergleichsweise gering ist. In der DE 10 2011 050 894 A1 wurde dieser Umstand explizit erläutert (vergleiche Absatz [0020] jener deutschen Patentanmeldung). Überraschenderweise konnte nun aber festgestellt werden, dass auch Einphotonenprozesse geeignet sind, um für eine Ausbeuteoptimierung bei chemischen Reaktionen jenseits der Restrukturierungsreaktionen zu sorgen.

Ob eine chemische Reaktion gemäß einem Einphotonenprozess oder einem Zweiphotonenprozess bzw. einem Multiphotonenprozess erfolgt, ist verhältnismäßig leicht einstellbar und nachweisbar. Die entscheidenden Parameter sind hierbei die Konzentration der zur Reaktion zu bringenden Edukte und die Intensität der verwendeten Lichtimpulse. Ist die Konzentration der Edukte hoch, ist auch die Wahrscheinlichkeit hoch, dass ein Edukt genau ein Photon absorbiert, dass also ein Einphotonenprozess abläuft. Ist die Konzentration der Edukte hingegen niedrig, ist die Wahrscheinlichkeit, dass Zweiphotonenprozesse oder Multiphotonenprozesse ablaufen, deutlich größer. Denn dann wechselwirkt ein Lichtimpuls häufig nur mit einem Molekül, so dass mehr als ein Photon des Lichtimpulses auf das entsprechende Molekül übergehen können.

Ist die Eduktkonzentration jedoch hoch, wechselwirkt ein Lichtimpuls mit zahlreichen Molekülen, so dass der Übergang einzelner Photonen von dem Lichtimpuls auf einzelne Eduktmoleküle weitaus wahrscheinlicher ist.

Zur Ausführung eines Einphotonenprozesses sind daher nur verhältnismäßig geringe Intensitäten des eingesetzten Lichtimpulses notwendig, wobei die vorzugsweise einzusetzende Intensität von der gewählten Eduktkonzentration und der Art der Eduktmoleküle abhängt. Aufgrund zahlreicher verschiedener möglicher Edukte lässt sich daher kein allgemeingültiger Intensitätsbereich für die Lichtimpulse angeben. Ebenso wenig ist es möglich, eine allgemein gültige Konzentration für die Edukte anzugeben. Vielmehr kann ein Fachmann durch eine verhältnismäßig einfache Berechnung die Parameter Eduktkonzentration und Lichtimpulsintensität als Stellschrauben derart berechnen und einstellen, dass ein Einphotonenprozess abläuft. Dies wird nachfolgend beispielhaft dargestellt.

Angenommen, es befinden sich in dem vom Lichtimpuls belichteten Probenvolumen N Moleküle, die den Lichtimpuls mit einer Wahrscheinlichkeit von 99 % absorbieren (beispielsweise bei einer optischen Dichte von 2 OD, also etwa 100 %). Die Anzahl der Photonen in dem Lichtimpuls beträgt aber nur 10⁻² * N, dann wird nur etwa jedes hundertste Molekül angeregt. Die Wahrscheinlichkeit, dass ein weiteres Photon auf ein Molekül trifft, das schon ein Lichtphoton absorbiert hat, beträgt damit 1 zu 10000. Einen solchen Prozess, bei dem ein angeregtes Molekül erneut angeregt wird, würde man fachsprachlich als Ladder-climbing-Anregung oder als sequentielle resonante Anregung bezeichnen. Diese Prozesse können nur in der kurzen Zeitspanne des angeregten Zustandes stattfinden und werden daher nur mit ultrakurzen Lichtpulsen erreicht.

Eine Zweiphotonenanregung ist typischerweise mindestens um den Faktor einhundert unwahrscheinlicher als eine Einphotonenanregung. Bei Mehrphotonenprozessen sinkt die Wahrscheinlichkeit weiter. Für diese Prozesse müssen in dem vom Lichtimpuls belichteten Probenvolumen deutlich mehr Photonen als absorbierende Moleküle vorliegen. Zum Beispiel können sich in dem Probevolumen N Moleküle befinden, die keine Einphotonenabsorption bei der Wellenlänge des Lichtes haben, aber eine typische Zweiphotonenabsorption bei einer optischen Dichte von 0,002 OD. Das bedeutet, dass etwa 0,5 % der Moleküle zwei Photonen absorbieren, wenn diese zur gleichen Zeit auf das Molekül treffen. Angenommen, der Lichtimpuls ist nur 10 fs lang, dann kann die Gleichzeitigkeit grundsätzlich gut erfüllt sein. Wenn nun der Lichtimpuls 2N Photonen besitzt (200-mal mehr als bei dem obigen Beispiel zum Einphotonenprozess), dann werden nur etwa 0,5 % der Moleküle angeregt. Sollte der Lichtimpuls zeitlich länger als 100 fs sein, wird diese Anzahl noch drastisch reduziert. Aus diesem Grund sind Zwei- und Mehrphotonenprozesse fast ausschließlich mit ultrakurzen Laserpulsen zu erreichen und erst nach der Einführung des Lasers zugänglich gewesen.

Das aus dem Stand der Technik bekannte Vorurteil, dass Einphotonenprozesse nur für Isomerisierungs- und Tautomerisierungsreaktionen einsetzbar sind, kann durch das vorliegende Verfahren klar widerlegt werden. Denn mit dem vorliegenden Verfahren ist es möglich, eine Ausbeuteoptimierung bei chemischen Reaktionen, die gerade keine Restrukturierungsreaktionen darstellen, durchzuführen.

Die Auswahl der gewünschten Schwingungsmode, die angeregt werden soll, erfolgt durch die Wellenlänge der Infrarotlichtimpulse. Wie bereits erläutert, weisen die Infrarotlichtimpulse eine invariable Wellenlänge auf, das heißt, es wird gerade kein Chirp auf die Infrarotlichtimpulse gelegt. Vielmehr wäre ein derartiger Chirp kontraproduktiv, da er nicht für die Anregung einer einzelnen Schwingungsmode, sondern für die Anregung verschiedener Schwingungsmoden sorgen würde.

Der durch die Schwingungsanregung vermittelte Energieeintrag in das Edukt kann auf direktem oder indirektem Wege erfolgen. Dies wird weiter unten noch erläutert werden.

Für das vorliegende Verfahren zur infrarotlichtinduzierten Ausbeuteoptimierung ist es unerheblich, ob nur Edukte eines einzelnen Typs oder Edukte zweier oder verschiedener Typen eingesetzt werden. Bezogen auf eine Polymerisierungsreaktion als Sonderform der chemischen Reaktion lässt sich die Ausbeute mit dem vorliegenden Verfahren sowohl bei der Herstellung eines Homopolymers als auch eines Hetero- bzw. Copolymers optimieren. Der Einfachheit halber wird nachfolgend immer von einem Edukt gesprochen, auch wenn tatsächlich verschiedene Edukte eingesetzt werden können.

In einer Variante wird das Verfahren derart ausgeführt, dass durch die Schwingungsanregung des Edukts die Ausbeute eines gewünschten Produkts erhöht und/oder die Ausbeute eines unerwünschten Produkts erniedrigt wird. Auf diese Art und Weise wird sichergestellt, dass eine Ausbeuteoptimierung in Bezug auf das gewünschte Produkt erfolgt. Werden durch die infrarotlichtinduzierte Ausbeuteoptimierung zudem unerwünschte Nebenreaktionen vermieden, kann die Reaktionseffizienz insgesamt steigen. Denn dann wird die Menge erzeugten Produkts pro eingesetzter Menge Edukts gesteigert.

Durch die Ausbeuteoptimierung werden in einem vorgegebenen Zeitintervall mindestens 10 %, insbesondere mindestens 20 %, insbesondere mindestens 30 %, insbesondere mindestens 40 %, insbesondere mindestens 50 %, insbesondere mindestens 60 %, insbesondere mindestens 70 %, insbesondere mindestens 80 %, insbesondere mindestens 90 %, insbesondere mindestens 100 %, insbesondere mindestens 150 % und ganz besonders mindestens 200% mehr gewünschten Produkts erhalten als im Fall einer nichtausbeuteoptimierten Ausführung der Reaktion. Das bedeutet, dass die Ausbeuteoptimierung nicht nur auf die grundsätzliche Steigerung der Ausbeute des gewünschten Produkts gerichtet ist, sondern auf die Ausbeute des gewünschten Produkts pro Zeitintervall. Mit anderen Worten ausgedrückt, kann durch das beschriebene Verfahren zur infrarotlichtinduzierten Ausbeuteoptimierung eine Beschleunigung der Reaktion erreicht werden.

Betrachtet man nicht nur die zeitliche Komponente der Ausbeuteoptimierung, sondern sowohl die zeitliche als auch die räumliche Komponente, ergibt sich in einer Variante eine noch bessere Ausbeuteoptimierung. Denn wie weiter unten ausgeführt werden wird, eignet sich das Verfahren vorzugsweise für eine ortsaufgelöste Ausbeuteoptimierung, die insbesondere durch eine Fokussierung der eingestrahlten Infrarotlichtimpulse erreicht werden kann. Im Rahmen einer derartigen ortsaufgelösten Ausbeuteoptimierung kann die Reaktion sowohl schneller als auch räumlich begrenzter als aus dem Stand der Technik bekannte Verfahren durchgeführt werden. dadurch ergibt sich ein synergistischer Effekt, der beispielsweise bei der Herstellung mikrostrukturierter Polymere ausgenutzt werden kann.

Bei der chemischen Reaktion handelt es sich um eine Synthesereaktion. Bei dieser engeren Definition des Begriffs "chemische Reaktion" sind folglich Dissoziationsreaktionen oder Ladder-Climbing-Dissoziationsreaktionen ausgenommen. In einer weiteren Variante umfasst der Begriff "chemische Reaktion" gerade keine bimolekularen Reaktionen.

In einer weiteren alternativen Ausgestaltung des Verfahrens handelt es sich bei der chemischen Reaktion um eine Reaktion, bei der die Molmasse des Produkts mindestens 20 %, insbesondere mindestens 30 %, insbesondere mindestens 40 %, insbesondere mindestens 50 %, insbesondere mindestens 60 %, insbesondere mindestens 70 %, insbesondere mindestens 80 %, insbesondere mindestens 90 %, insbesondere mindestens 100 %, insbesondere mindestens 150 % und ganz besonders mindestens 200 % größer als die Molmasse des Edukts ist ( eine Synthese hat stattgefunden).

In einer alternativen Ausgestaltung des Verfahrens unterscheidet sich die chemische Struktur des Produkts von der chemischen Struktur des Edukts in mindestens einem Atom, insbesondere mindestens zwei Atomen, insbesondere mindestens drei Atomen, insbesondere mindestens vier Atomen, insbesondere mindestens fünf Atomen, insbesondere mindestens sechs Atomen, insbesondere mindestens sieben Atomen, insbesondere mindestens acht Atomen, insbesondere mindestens neun Atomen und ganz besonders mindestens 10 Atomen. Bei den Atomen, hinsichtlich derer es eine Änderung zwischen dem Produkt und dem Edukt gibt, kann es sich insbesondere um Protonen handeln. Ferner ist auch jede beliebige Kombination dieser oder anderer Atome möglich.

In einer weiteren Ausgestaltung des Verfahrens werden die Infrarotlichtimpulse durch eine nicht-kohärente Lichtquelle erzeugt. Derartige nicht-kohärente Lichtquellen sind beispielsweise gewöhnliche Infrarotlichtlampen oder Globare. Durch derartige nicht-kohärente Lichtquellen kann der Einphotonenprozess auf besonders vorteilhafte Weise durchgeführt werden. Auch eine Gasentladungslampe eignet sich als nicht-kohärente Lichtquelle. Eine kontinuierliche Bestrahlung durch derartige Lichtquellen stellt eine Aneinanderreihung von Lichtimpulsen dar, die auf das Edukt einwirken.

In einer weiteren Ausgestaltung des Verfahrens werden die Infrarotlichtimpulse durch einen Laser erzeugt. Auch derartige kohärente Lichtquellen können eingesetzt werden, um den gewünschten Einphotonenprozess zu induzieren. Dabei können sowohl gepulste Laser als auch kontinuierlich emittierende Laser (cw-Laser) eingesetzt werden. Im Fall von kontinuierlich emittierenden Lasern (auch als Dauerstrichlaser bezeichnet) können die Infrarotlichtimpulse durch einen nachgeordneten Shutter oder ein vergleichbares Element erzeugt werden. Ebenso ist eine kontinuierliche Bestrahlung der Edukte möglich.

In einer weiteren alternativen Ausgestaltung des Verfahrens weisen die Infrarotlichtimpulse keine Phasenmodulation auf. Dies kann beispielsweise dadurch bewerkstelligt werden, dass eine nicht-phasenmodulierte Lichtquelle eingesetzt wird. Durch eine derartige Lichtquelle kann wiederum auf besonders einfache Weise verhindert werden, dass kohärente Prozesse angeregt werden, während der erwünschte Einphotonenprozess in besonders vorteilhafter Weise induziert wird.

In einer weiteren alternativen Ausgestaltung des Verfahrens weisen die Infrarotlichtimpulse eine spektrale Breite von weniger als 50 cm⁻¹, insbesondere von weniger als 40 cm⁻¹, insbesondere von weniger als 30 cm⁻¹, insbesondere von weniger als 20 cm⁻¹, insbesondere von weniger als 10 cm⁻¹, insbesondere von weniger als 5 cm⁻¹, insbesondere von weniger als 2 cm-' und ganz besonders von weniger als 1 cm-' auf. Durch derart schmalbandige Infrarotlichtimpulse kann auf besonders vorteilhafte Weise eine Auswahl der zur Schwingungsanregung gewünschten Schwingungsmode erfolgen. Je schmalbandiger die Infrarotlichtimpulse sind, desto weniger wahrscheinlich ist eine Anregung mehrerer Schwingungsmoden. Allerdings ist hierbei auch zu berücksichtigen, dass eine gewisse spektrale Breite zur effizienten Anregung einer einzigen spektralen Mode regelmäßig erforderlich ist.

In einer weiteren alternativen Verfahrensausgestaltung weisen die Infrarotlichtimpulse eine Polarisation auf. Vorzugsweise handelt es sich bei der Polarisation um eine lineare Polarisation. Auf diese Weise ist es möglich, nur Schwingungen von Molekülen anzuregen, die sich in einer bestimmten räumlichen Orientierung in dem Reaktionsansatz befinden. Durch derart polarisierte Infrarotlichtimpulse können folglich spezifische Strukturen aus dem Produkt in dem Reaktionsansatz erzeugt werden, wenn man dafür sorgt, dass die Diffusion von Produktmolekülen reduziert oder nahezu vollständig unterbunden wird.

In einer weiteren alternativen Verfahrensausgestaltung weisen die Lichtimpulse ferner eine Pulslänge von mindestens 100 fs und maximal 10 ps, insbesondere im Bereich von 200 fs bis 5 ps, insbesondere im Bereich von 300 fs bis 3 ps, insbesondere im Bereich von 500 fs bis 2 ps, insbesondere im Bereich von 700 fs bis 1 ps auf.

Wie bereits oben kurz ausgeführt, kann der Energieeintrag in das Edukt auf direktem oder indirektem Wege mittels Schwingungsanregung erfolgen. In einer Variante des Verfahrens regen die Infrarotlichtimpulse zunächst einen Katalysator mittels Schwingungsanregung durch einen Einphotonenprozess an. Anschließend relaxiert der Katalysator und gibt dabei einen Teil der zuvor auf ihn übertragenen Energie an das Edukt ab. Dies ist ein indirekter Energieeintrag in das Edukt, wobei der Energieeintrag auch in diesem Fall mittels Schwingungsanregung durch einen Einphotonenprozess erfolgt.

In einer weiteren Ausgestaltung des Verfahrens werden die Infrarotlichtimpulse (ohne "Umweg" über einen Katalysator oder ein anderes Drittmolekül) von dem Edukt absorbiert. Auf diese Weise ist ein direkter Energieeintrag in das Edukt möglich. Ob das Verfahren unter Ausnutzung eines direkten oder indirekten Energieeintrags ausgeführt wird, hängt maßgeblich von der Wellenlänge der Infrarotlichtimpulse ab. Weisen die eingesetzten Infrarotlichtimpulse eine Wellenlänge auf, die der Frequenz einer Schwingung im Eduktmolekül entspricht, erfolgt ein direkter Energieeintrag. Entspricht die gewählte Wellenlänge hingegen einer Frequenz einer Schwingung des Katalysators, erfolgt ein indirekter Energieeintrag.

Schließlich sind auch Kombinationen aus einem direkten und einem indirekten Energieeintrag möglich. So ist es in einer Variante des Verfahrens vorgesehen, dass die Schwingungsanregung des Edukts durch inter- und/oder intramolekulare Schwingungsrelaxation indirekt erfolgt. Beispielsweise kann eine erste Schwingung im Edukt direkt durch die Infrarotlichtimpulse angeregt werden und dann ihre Energie auf eine weitere Schwingung im selben Eduktmolekül oder in einem anderen Eduktmolekül übertragen. Auf diese Weise hätte man zunächst einen direkten Energieeintrag, der dann in einem indirekten Energieeintrag der letztlich angeregten Schwingung transformiert wird.

Durch die inter- und/oder intramolekulare Schwingungsrelaxation kommt es nicht nur zu einer Anregung einer weiteren Schwingung bzw. Reaktionskoordinate, sondern auch zur Verringerung des Anteils einer anderen Schwingung bzw. einer anderen Reaktionskoordinate, so dass auf diese Weise eine gezielte Schwingungsauswahl bzw. Auswahl einer geeigneten Reaktionskoordinate erfolgen kann. Dieses Phänomen der inter- und/oder intramolekularen Schwingungsrelaxation wird nachfolgend nochmals näher erläutert.

Es wurde von Heyne et al. *(*Cascaded Energy Redistribution upon O-H Stretching Excitation in an Intramolecular Hydrogen bond: K. Heyne, E. T. J. Nibbering, T. Elsaesser, M. Petkovic und O. Kühn, J. Phys. Chem. A 2004, 108, 6083; V. Kozich et al. Chem. Phys. Lett., (2005), 415, 121-125; Kozich et al. Chem. Phys. Lett. (2009), 473, 171-175) gezeigt, dass eine direkte Anregung einer einzelnen Schwingungsmode, wie etwa einer O-H-Streckschwingung, dazu führen kann, dass die Anregung innerhalb weniger Pikosekunden auf andere Schwingungsmoden verteilt werden kann (beispielsweise auf O-H-Biegeschwingungen). Damit können durch direkte Anregung einer Schwingungsmode innerhalb einer Nichtgleichgewichtsdynamik andere Schwingungsmoden indirekt angeregt werden. Bei dieser Schwingungsrelaxation werden die verschiedenen Schwingungsmoden besetzt, so als wenn diese direkt angeregt worden wären.

Eine indirekte Anregung der Reaktionskoordinate liegt also vor, wenn eine Schwingung angeregt wird und auf einer Zeitskala, auf der nicht das thermische Gleichgewicht gemäß der Boltzmann-Statistik gebildet wird, andere Schwingungen in Folge einer Schwingungsenergieumverteilung angeregt werden, die die Reaktionskoordinate bilden. Auf das oben genannte und in Heyne et al. beschriebene Beispiel bezogen, könnte die O-H-Biegeschwingung die Reaktionskoordinate sein, die dadurch angeregt wird, dass die Anregung der O-H-Streckschwingung in diese Schwingungsmode relaxiert, deutlich bevor sich das thermische Gleichgewicht im Molekül einstellt.

In einer weiteren alternativen Verfahrensausgestaltung wird kurzzeitig eine Pseudotemperatur im Edukt erreicht, die um mindestens 30 %, insbesondere um mindestens 40 %, insbesondere um mindestens 50 %, insbesondere um mindestens 60 %, insbesondere um mindestens 70 %, insbesondere um mindestens 80 %, insbesondere um mindestens 90 % und ganz besonders um mindestens 100 % höher ist als die Temperatur im Edukt vor dem Energieeintrag durch die Infrarotlichtimpulse. Unter "Kurzzeitig" wird dabei eine Zeitdauer von weniger als 1 ns, insbesondere weniger als 750 ps, insbesondere weniger als 500 ps und ganz besonders weniger als 100 ps verstanden. Wie oben erläutert, entspricht die Pseudotemperatur des Moleküls nicht dessen Temperatur. Vielmehr besteht die Pseudotemperatur nur für einen kurzen Zeitraum, während dessen eine Besetzung sämtlicher Schwingungsmoden des Moleküls gemäß der Boltzmann-Statistik erfolgt. Eine erhöhte Pseudotemperatur stellt also kein thermisch erwärmtes Molekül dar, sondern dient lediglich als Maß für den erfolgten Energieeintrag, der innerhalb eines kurzen Zeitraumes in die entsprechenden Schwingungsmoden umgesetzt wird.

In einer weiteren alternativen Verfahrensausgestaltung werden mehrere überlagerte Infrarotlichtimpulse verwendet, die sich voneinander jeweils in mindestens einem Parameter unterscheiden. Als Unterschiedsparameter wird dabei insbesondere die mittlere Wellenlänge der Infrarotlichtimpulse herangezogen. Aber auch andere Parameter, wie etwa die Pulslänge oder die Pulsintensität, können variiert werden. Auf diese Weise ist es möglich, gleichzeitig mehrere Schwingungsanregungen im Edukt zu erzeugen, wobei die einzelnen Schwingungsanregungen jeweils durch Einphotonenprozesse ausgeführt werden.

In einer alternativen Ausgestaltung des Verfahrens handelt es sich bei dem Produkt, dessen Ausbeute optimiert wird, um ein Antibiotikum, einen Naturstoff oder ein Arzneimittel, wobei die chemische Reaktion eine thermisch getriebene Reaktion ist. Unabhängig von den tatsächlich erhaltenen Produkten eignet sich das Verfahren zur infrarotlichtinduzierten Ausbeutoptimierung insbesondere zur Ausbeuteoptimierung bei chemischen Reaktionen, die thermisch getrieben sind. Durch die Anwendung des Verfahrens bei der Antibiotikaherstellung, der Naturstoffsynthese oder der Arzneimittelherstellung werden wichtige Reaktionsschritte regelmäßig thermisch getrieben. Daher bietet es sich an, das Verfahren zur Ausbeuteoptimierung in derartigen Herstellungs- bzw. Syntheseverfahren einzusetzen.

In einer weiteren alternativen Verfahrensausgestaltung sind während der Schwingungsanregung mindestens zwei Eduktmoleküle (die, wie oben erläutert, gleich oder verschieden sein können) durch physikalische und/oder chemische Bindungen miteinander assoziiert. Eine derartige Assoziierung mittels Bindungen führt zu einer weiteren Effizienzsteigerung der ausbeuteoptimierten chemischen Reaktion, da die Wahrscheinlichkeit zur Reaktion der Edukte auf diese Weise gesteigert wird. Die Assoziierung kann beispielsweise durch eine Wasserstoffbrückenbindung, eine van-der-Waals-Bindung, durch π-π-Wechselwirkung, durch eine ionische Bindung, durch Ligandenbindung und/oder durch eine Salzbrücke geschehen. Selbstverständlich können jeweils mehr als eine der vorgenannten Bindungen oder Wechselwirkungen in beliebiger Kombination zwischen zwei Molekülen auftreten. Die bereits vorhandene Assoziation führt dazu, dass die Reaktionswahrscheinlichkeit geändert wird, da diese beiden Moleküle nicht mehr per Diffusion zufällig aufeinander treffen müssen.

In einer alternativen Verfahrensausgestaltung dient der Energieeintrag, der mittels der Schwingungsanregung erreicht wird, zur Bildung eines aktivierten Komplexes mindestens zweier Moleküle des Edukts. Aus diesem aktivierten Komplex entsteht dann anschließend das Produkt. Der durch die Schwingungsanregung vermittelte Energieeintrag wird also dazu ausgenutzt, um die zur Bildung des aktivierten Komplexes benötigte Aktivierungsenergie bereitzustellen.

In einer weiteren Verfahrensvariante dient die Schwingungsanregung zu einer Beschleunigung der chemischen Reaktion im Vergleich zu einer Reaktion ohne Schwingungsanregung. Der infrarotlichtinduzierte Energieeintrag dient in dieser Variante also nicht nur der globalen Optimierung der Ausbeute des gewünschten Produktes, sondern zu einer Ausbeuteoptimierung mittels Reaktionsbeschleunigung. Unabhängig davon, ob nun die Ausbeute eines gewünschten Produktes erhöht oder die Ausbeute eines unerwünschten Produktes erniedrigt wird, steigert eine derartige Reaktionsbeschleunigung bereits die Effizienz der durchgeführten chemischen Reaktion.

In einer weiteren alternativen Verfahrensausgestaltung erfolgt die lichtinduzierte Ausbeuteoptimierung in einem örtlich begrenzten Volumen des Edukts. Dieses örtlich begrenzte Volumen ist durch die räumliche Einwirkung der Infrarotlichtimpulse gegeben. Durch geeignete Fokussierung kann die Ausbeuteoptimierung folglich mit hoher Ortsauflösung durchgeführt werden, weshalb sich das Verfahren beispielsweise zur Herstellung mikrostrukturierter Polymere eignet. Ebenso ist es in dieser Variante möglich, dass eine hoch ortsaufgelöste chemische Synthese oder andere chemische Reaktion durchgeführt wird.

Die Erfindung betrifft auch die Verwendung von Infrarotlichtimpulsen mit einer mittleren Wellenlänge im Bereich von 2000 bis 100.000 Nanometern zur Schwingungsanregung eines Edukts durch einen Einphotonenprozess. Dabei weisen die Infrarotlichtimpulse eine feste Wellenlänge auf. Ferner handelt es sich bei der chemischen Reaktion um eine Reaktion, bei der ein Produkt gebildet wird, dessen Summenformel nicht der Summenformel des Edukts entspricht. Schließlich resultiert die Schwingungsanregung zum überwiegenden Teil nicht in einer thermischen Erwärmung des Edukts.

Bevorzugte Ausgestaltungen des oben erläuterten Verfahrens sind in analoger Weise auf die offenbarte Verwendung von Infrarotlichtimpulsen anwendbar und umgekehrt.

Weitere Einzelheiten des beanspruchten Verfahrens werden im Zusammenhang mit den Figuren erläutert. Es zeigen:
- Figur 1: eine schematische Darstellung einer ersten eindimensionalen potentiellen Energielandschaft entlang der Reaktionskoordinate,
- Figur 2: eine schematische Darstellung einer zweiten eindimensionalen potentiellen Energielandschaft entlang der Reaktionskoordinate bei Einsatz eines Katalysators und
- Figur 3: eine schematische Darstellung einer dritten eindimensionalen potentiellen Energielandschaft entlang der Reaktionskoordinate bei einer Lichtanregung.

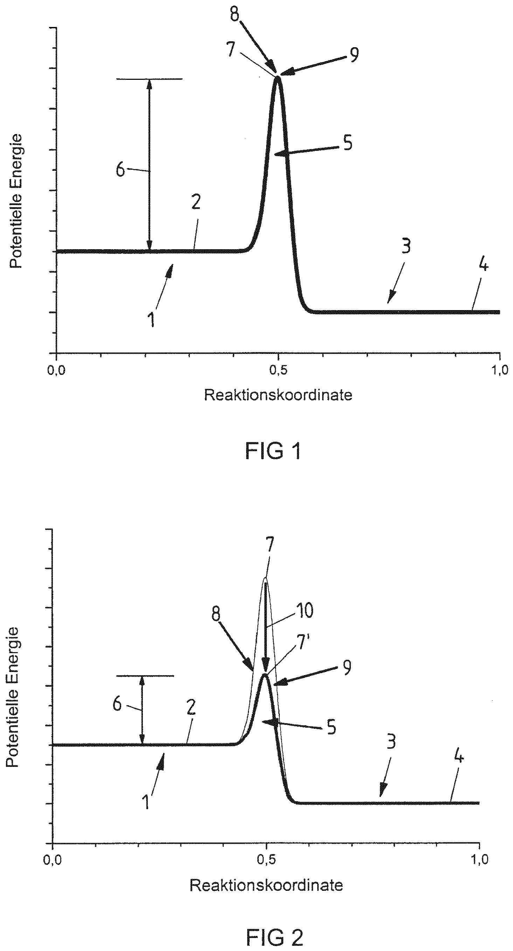

Die Figur 1 zeigt eine schematische Darstellung der Energielandschaft einer chemischen Reaktion, wobei die potentielle Energie über der Reaktionskoordinate aufgetragen ist. Die Reaktionskoordinate entwickelt sich entlang des zeitlichen Verlaufs der Reaktion, wobei die Reaktion bei 0 beginnt und bei 1 beendet ist.

Zunächst sind Edukte 1 vorhanden, deren potentielle Energie auf einem ersten Energieniveau 2 liegt. Damit die Edukte 1 in Produkte 3 überführt werden können, deren potentielle Energie auf einem zweiten Energieniveau 4 liegt, das niedriger als das erste Energieniveau 2 ist, muss eine Potentialbarriere 5 für die chemische Reaktion überwunden werden. Zur Überwindung dieser Potentialbarriere 5 muss eine Aktivierungsenergie 6 aufgebracht werden, deren Höhe der Differenz zwischen dem ersten Energieniveau 2 und einem dritten Energieniveau 7, das auf dem Maximum der Potentialbarriere 5 liegt, entspricht. Wenn den Edukten 1 die Aktivierungsenergie 6 zugeführt wird, liegt ein aktivierter Komplex 8 vor, der einem Übergangszustand 9 entspricht. Aus diesem aktivierten Komplex 8 bzw. Übergangszustand 9 können die vorherigen Edukte 1 dann in die Produkte 3 überführt werden.

Die chemische Reaktion, die dem in der Figur 1 dargestellten schematischen Verlauf entspricht, ist eine thermisch getriebene Reaktion, die entlang der Reaktionskoordinate von links nach rechts verläuft und bei der Energie freigesetzt wird, deren Höhe sich aus der Differenz zwischen dem zweiten Energieniveau 4 und dem ersten Energieniveau 2 ergibt.

Damit eine Reaktion ablaufen kann, muss also der Übergangszustand 9 bzw. der aktivierte Komplex 8 gebildet werden können. Um die Wahrscheinlichkeit zu erhöhen, den aktivierten Komplex 8 zu bilden, werden häufig Katalysatoren eingesetzt, um die Potentialbarriere 5 für die Reaktion zu reduzieren. Dadurch wird weniger Aktivierungsenergie 6 benötigt, und es kann auch bei Raumtemperatur ein signifikanter Anstieg der Reaktionsausbeute (Produktausbeute) erreicht werden.

In der Figur 2 ist eine eindimensionale potentielle Energielandschaft dargestellt, die der in der Figur 1 dargestellten Energielandschaft ähnelt. Gleiche Elemente werden wiederum mit gleichen Bezugszeichen versehen. Die in der Figur 2 dargestellte Energielandschaft betrifft jedoch eine Reaktion, bei der ein Katalysator eingesetzt wird. Der Katalysator bewirkt eine Absenkung 10 der Potentialbarriere 5 auf ein niedrigeres Niveau. Das Maximum der Potentialbarriere 5 liegt damit nicht mehr auf dem dritten Energieniveau 7, sondern auf einem abgesenkten dritten Energieniveau 7'. Damit ist auch die aufzubringende Aktivierungsenergie zur Überführung der Edukte 1 in den aktivierten Komplex 8 deutlich geringer. Folglich ist die Wahrscheinlichkeit der Reaktion der Edukte 1 zu den Produkten 3 größer, da die Potentialbarriere 5 leichter überwunden werden kann. Durch einen zusätzlichen Energieeintrag in die Edukte 1 kann es zudem zu einer noch wahrscheinlicheren Überwindung der Potentialbarriere 5 kommen.

Ein derartiger Energieeintrag wird häufig durch eine Erwärmung der Edukte bewerkstelligt. So wird in Temperatursprung-Reaktionen wird mit einer äußeren Quelle die Temperatur lokal sprunghaft erhöht, um die thermische Besetzung zu ändern. Solche Prozesse sind deutlich langsamer als die Prozesse der vorliegenden Erfindung. In einem Temperatursprung-Prozess wird lokal eine Temperaturänderung eingeführt. Allerdings können die Moleküle in dem lokal begrenzten Bereich, in dem die Temperatur erhöht wird, durch die Boltzmann-Statistik beschreiben werden. In diesem Sinne sind solche Prozesse molekulare Gleichgewichtsprozesse.

Wird beispielsweise mit einem Nanosekunden-Infrarotlaser eine Lösung räumlich lokalisiert bestrahlt, dann ändert sich die Temperatur aller Moleküle stark (auch der Lösungsmittelmoleküle). Die Temperaturänderungen sind daher groß. Die Ratenkonstanten für das thermische Gleichgewicht ändern sich und alle Schwingungen werden gleichermaßen angeregt. Dadurch ergeben sich auch um Größenordnungen längere Zeitkonstanten für diesen Prozess im Vergleich zur infrarotlichtinduzierten Ausbeuteoptimierung.

In diesem Zusammenhang konnten die Erfinder zeigen, dass eine spezifische Anregung von Lösungsmittelmolekülen, die zu einer Erwärmung des Lösungsmittels führt, nicht die vorliegend beschriebene und beanspruchte Ausbeuteoptimierung zur Folge hat. Vielmehr konnte im Fall einer Erwärmung des Lösungsmittels mittels Infrarotstrahlungsanregung keine in der hier betrachteten Zeitskala relevante Reaktionsbeschleunigung und damit auch keine Ausbeuteoptimierung beobachtet werden.

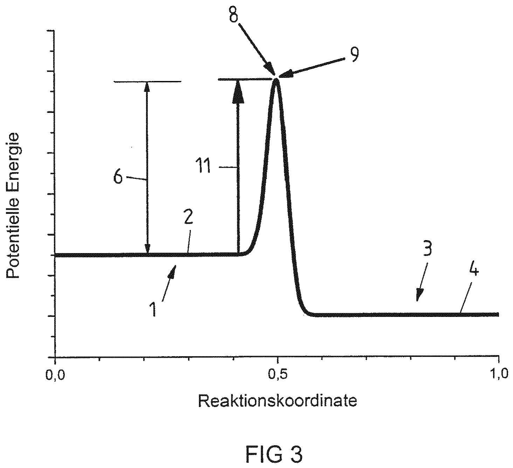

Die Figur 3 zeigt eine weitere schematische Darstellung einer potentiellen Energielandschaft, wobei in den Figuren 1 und 2 bereits dargestellte Elemente wiederum mit den gleichen Bezugszeichen versehen werden. Diesbezüglich wird auf die obigen Ausführungen verwiesen.

In der Figur 3 ist eine Möglichkeit dargestellt, wie durch eine infrarotlichtinduzierte Ausbeuteoptimierung eine Überwindung der Potentialbarriere 5 erreicht werden kann. Denn wenn eine Energie 11, die durch die Infrarotlichtimpulse bereitgestellt wird, zumindest der Aktivierungsenergie 6 entspricht, werden die Edukte 1 in den aktivierten Komplex 8 bzw. Übergangszustand 9 überführt. Von dort kann der aktivierte Komplex ohne weitere Energiezufuhr von außen direkt zu den Produkten 3 reagieren. Die Absorption von infrarotem Licht verursacht kurzzeitig einen Nichtgleichgewichtszustand in den Edukten 1. Bevor dieser Nichtgleichgewichtszustand wieder zum Ursprungszustand relaxiert, kann der aktivierte Komplex in das Produkt überführt werden, so dass sich die Reaktionsausbeute für das Produkt 3 entlang der Reaktionskoordinate erhöht.

Die vorliegend beschriebene infrarotlichtinduzierte Ausbeuteoptimierung mittels Schwingungsanregung wird nachfolgend anhand eines Beispiels näher erläutert.

Ist die Reaktionskoordinate durch eine Schwingung gegeben, beispielsweise eine S-H-Streckschwingung, und die Aktivierungsenergie durch die Anregung dieser Schwingung, dann bedeutet dies, dass die S-H-Streckschwingung angeregt werden muss, um den aktivierten Zustand zu erreichen.

Die S-H-Streckschwingung absorbiert typischerweise bei 2600 cm⁻¹. Bei Raumtemperatur T = 293,15 K (20 °C) ist die mittlere kinetische Energie der Moleküle 3/2 k_{B}T = 305 cm-'. Das bedeutet, dass nach der Boltzmannverteilung die relative Besetzungswahrscheinlichkeit der S-H-Streckschwingung gegeben ist durch N: N=exp(-E_{vib}/k_{B}T)=exp(-2600/k_{B}T)=2,7*10⁻⁶ = 0,0000027. Die Wahrscheinlichkeit, ein Molekül in diesem schwingungsangeregten Zustand zu finden, ist sehr klein.

Erhöht man die Temperatur um 10 °C, dann erhöht sich die kinetische Energie auf 315 cm⁻¹, und N auf 0,0000042. Die Wahrscheinlichkeit für die thermische Anregung ist immer noch sehr klein, das bedeutet, dass die Reaktion sehr langsam abläuft. In dem Fall, dass noch alternative Reaktionen ablaufen können, führt die niedrige Wahrscheinlichkeit der Reaktion zu einer insgesamt sehr schlechten Reaktionsausbeute bzw. zu einem ineffizienten Reaktionsverlauf.

Durch eine infrarotlichtinduzierte Ausbeuteoptimierung kann die Reaktionseffizienz mittels einer Überführung von Eduktmolekülen in einen schwingungsangeregten Zustand jedoch signifikant erhöht werden. Zur Anregung der S-H-Streckschwingung werden Infrarotlichtimpulse mit einer Wellenzahl von 2600 cm⁻¹ verwendet. Durch eine derartige Anregung steigt die Besetzungswahrscheinlichkeit der S-H-Streckschwingung stark an.

## Patentansprüche

1. Verfahren zur infrarotlichtinduzierten Ausbeuteoptimierung von chemischen Reaktionen, wobei ein Energieeintrag in mindestens ein Edukt (1), das einer chemischen Reaktion unterzogen wird, mittels Infrarotlichtimpulsen erfolgt, die eine mittlere Wellenlänge im Bereich von 2 000 bis 100 000 nm aufweisen, wobei die chemische Reaktion eine Synthesereaktion ist, bei der ein Produkt (3) gebildet wird, dessen Summenformel nicht der Summenformel des Edukts (1) entspricht und wobei die Ausbeuteoptimierung zum überwiegenden Teil nicht auf einer thermischen Erwärmung des Edukts beruht, wobei die Infrarotlichtimpulse eine feste Wellenlänge aufweisen und der Energieeintrag in das Edukt (1) mittels Schwingungsanregung durch einen Einphotonenprozess erfolgt,
**dadurch gekennzeichnet,**
**dass** die Infrarotlichtimpulse eine infrarotlichtinduzierte Schwingungsanregung einer direkten oder indirekten Reaktionskoordinate im elektronischen Grundzustand der Synthesereaktion bewirken, dass die Synthesereaktion eine thermisch getriebene Reaktion ist und dass durch die Ausbeuteoptimierung in einem vorgegebenen Zeitintervall mindestens 10 % mehr eines gewünschten Produkts (3) erhalten werden als im Fall einer nicht ausbeuteoptimierten Ausführung der Reaktion.

2. Verfahren gemäß Anspruch 1, **dadurch gekennzeichnet, dass** durch die Schwingungsanregung des Edukts (1) die Ausbeute eines gewünschten Produkts (3) erhöht und/oder die Ausbeute eines unerwünschten Produkts erniedrigt wird.

3. Verfahren gemäß Anspruch 1 oder 2, **dadurch gekennzeichnet, dass** die Infrarotlichtimpulse durch eine nicht-kohärente Lichtquelle erzeugt werden.

4. Verfahren gemäß Anspruch 1 oder 2, **dadurch gekennzeichnet, dass** Infrarotlichtimpulse durch einen Laser erzeugt werden.

5. Verfahren gemäß einem der vorhergehenden Ansprüche, **dadurch gekennzeichnet, dass** die Infrarotlichtimpulse keine Phasenmodulation aufweisen.

6. Verfahren gemäß einem der vorhergehenden Ansprüche, **dadurch gekennzeichnet, dass** die Infrarotlichtimpulse eine spektrale Breite von weniger als 50 cm⁻¹ aufweisen.

7. Verfahren gemäß einem der vorhergehenden Ansprüche, **dadurch gekennzeichnet, dass** die Infrarotlichtimpulse eine Pulslänge von mindestens 100 fs und maximal 10 ps aufweisen.

8. Verfahren gemäß einem der vorhergehenden Ansprüche, **dadurch gekennzeichnet, dass** die Infrarotlichtimpulse zunächst einen Katalysator mittels Schwingungsanregung durch einen Einphotonenprozess anregen, wobei der Katalysator anschließend zumindest einen Teil der auf ihn übertragenen Energie an das Edukt (1) abgibt.

9. Verfahren gemäß einem der vorhergehenden Ansprüche, **dadurch gekennzeichnet, dass** die Schwingungsanregung des Edukts (1) durch inter- und/oder intramolekulare Schwingungsrelaxation indirekt erfolgt.

10. Verfahren gemäß einem der vorhergehenden Ansprüche, **dadurch gekennzeichnet, dass** innerhalb eines Zeitraums von bis zu einer Nanosekunde nach Energieabsorption eine Pseudotemperatur im Edukt (1) erreicht wird, die um mindestens 30 % höher ist als die Temperatur im Edukt (1) vor dem Energieeintrag durch die Infrarotlichtimpulse.

11. Verfahren gemäß einem der vorherigen Ansprüche, **dadurch gekennzeichnet, dass** mehrere überlagerte Infrarotlichtimpulse verwendet werden, die sich jeweils voneinander in mindestens einem Parameter, insbesondere hinsichtlich ihrer mittleren Wellenlänge, unterscheiden.

12. Verfahren gemäß einem der vorherigen Ansprüche, **dadurch gekennzeichnet, dass** das Produkt, dessen Ausbeute optimiert wird, ein Antibiotikum, ein Naturstoff oder ein Arzneimittel ist, wobei die chemische Reaktion eine thermisch getriebene Reaktion ist.

13. Verfahren gemäß einem der vorherigen Ansprüche, **dadurch gekennzeichnet, dass** bei der Schwingungsanregung mindestens zwei Eduktmoleküle durch physikalische und/oder chemische Bindungen miteinander assoziiert sind.

14. Verfahren gemäß einem der vorherigen Ansprüche, **dadurch gekennzeichnet, dass** die Schwingungsanregung zu einer Beschleunigung der chemischen Reaktion im Vergleich zu einer Reaktion ohne Schwingungsanregung führt.

15. Verwendung von Infrarotlichtimpulsen mit einer mittleren Wellenlänge im Bereich von 2 000 bis 100 000 nm zur Schwingungsanregung eines Edukts (1) durch einen Einphotonenprozess, wobei
- die Infrarotlichtimpulse eine feste Wellenlänge aufweisen,
- die chemische Reaktion eine Synthesereaktion ist, bei der ein Produkt (3) gebildet wird, dessen Summenformel nicht der Summenformel des Edukts (1) entspricht und
- die Schwingungsanregung zum überwiegenden Teil nicht in einer thermischen Erwärmung des Edukts resultiert,
- die Infrarotlichtimpulse eine infrarotlichtinduzierte Schwingungsanregung einer direkten oder indirekten Reaktionskoordinate im elektronischen Grundzustand der Synthesereaktion bewirken,
- die Synthesereaktion eine thermisch getriebene Reaktion ist und
- durch die Ausbeuteoptimierung in einem vorgegebenen Zeitintervall mindestens 10 % mehr eines gewünschten Produkts (3) erhalten werden als im Fall einer nicht ausbeuteoptimierten Ausführung der Reaktion.

## Claims

1. Method for the infrared light-induced yield optimization of chemical reactions, wherein energy input into at least one starting material (1) which is subjected to a chemical reaction, is carried out by means of infrared light pulses which have an average wavelength in the range from 2,000 to 100,000 nm, wherein the chemical reaction is a synthesis reaction in which a product (3) is formed, the molecular formula of which is not equal to the molecular formula of the starting material (1), and wherein the yield optimization is predominantly not based on thermal heating of the starting material, wherein the infrared light pulses have a fixed wavelength and the energy input into the starting material (1) takes place by means of vibrational excitation by a single-photon process,
**characterized in**
**that** the infrared light pulses cause an infrared light-induced vibrational excitation of a direct or indirect reaction coordinate in the electronic ground state of the synthesis reaction, in that the synthesis reaction is a thermally driven reaction, and in that at least 10% more of a desired product (3) is obtained within a given time interval by the yield optimization than in the case of a non-yield-optimized execution of the reaction.

2. Method according to claim 1, **characterized in that** by the vibrational excitation of the starting material (1) the yield of a desired product is increased (3) and/or the yield of an undesired product is decreased.

3. Method according to claim 1 or 2, **characterized in that** the infrared light pulses are generated by a non-coherent light source.

4. Method according to claim 1 or 2, **characterized in that** infrared light pulses are generated by a laser.

5. Method according to any one of the preceding claims, **characterized in that** the infrared light pulses do not exhibit phase modulation.

6. Method according to any one of the preceding claims, **characterized in that** the infrared light pulses have a spectral width of less than 50 cm⁻¹.

7. Method according to any one of the preceding claims, **characterized in that** the infrared light pulses have a pulse length of at least 100 fs and at most 10 ps.

8. Method according to any one of the preceding claims, **characterized in that** the infrared light pulses first excite a catalyst by means of vibrational excitation by means of a single-photon process, wherein the catalyst then transfers at least part of the energy transferred to it to the starting material (1).

9. Method according to any one of the preceding claims, **characterized in that** the vibrational excitation of the starting material (1) is effected indirectly by inter-and/or intramolecular vibrational relaxation.

10. Method according to any one of the preceding claims, **characterized in that,** within up to one nanosecond after energy absorption, a pseudo-temperature is reached in the starting material (1), which is at least 30% higher than the temperature in the starting material (1) prior to the energy input by the infrared light pulses.

11. Method according to any one of the preceding claims, **characterized in that** several superimposed infrared light pulses are used, each of which differ from one another by at least one parameter, in particular with respect to their average wavelength.

12. Method according to any one of the preceding claims, **characterized in that** the product, the yield of which is optimized, is an antibiotic, a natural substance or a drug, wherein the chemical reaction is a thermally driven reaction.

13. Method according to any one of the preceding claims, **characterized in that,** during the vibrational excitation, at least two starting material molecules are associated with one another by physical and/or chemical bonds.

14. Method according to any one of the preceding claims, **characterized in that** the vibrational excitation leads to an acceleration of the chemical reaction compared with a reaction without vibrational excitation.

15. Use of infrared light pulses having an average wavelength in the range from 2,000 to 100,000 nm for vibrational excitation of a starting material (1) by a single-photon process, wherein
- the infrared light pulses have a fixed wavelength,
- the chemical reaction is a synthesis reaction in which a product (3) is formed, the molecular formula of which is not equal to the molecular formula of the starting material (1), and
- the vibrational excitation does not largely result in a thermal heating of the starting material,
- the infrared light pulses cause infrared light-induced vibrational excitation of a direct or indirect reaction coordinate in the electronic ground state of the synthesis reaction,
- the synthesis reaction is a thermally driven reaction, and
- at least 10% more of a desired product (3) is obtained within a given time interval by means of the yield optimization than in the case of a non-yield-optimized reaction.

## Revendications

1. Procédé d'optimisation du rendement de réactions chimiques induites par la lumière infrarouge, un apport d'énergie dans au moins un éduit (1) qui est soumis à une réaction chimique étant effectué au moyen d'impulsions de lumière infrarouge qui présentent une longueur d'onde moyenne dans la plage de 2 000 à 100 000 nm, la réaction chimique étant une réaction de synthèse lors de laquelle un produit (3) est formé, dont la formule brute ne correspond pas à la formule brute de l'éduit (1), et l'optimisation du rendement ne reposant pas en majeure partie sur un chauffage thermique de l'éduit, les impulsions de lumière infrarouge présentant une longueur d'onde fixe et l'apport d'énergie dans l'éduit (1) s'effectuant au moyen d'une excitation vibratoire par un processus à un seul photon,
**caractérisé en ce que**
les impulsions de lumière infrarouge provoquent une excitation vibratoire induite par la lumière infrarouge d'une coordonnée de réaction directe ou indirecte dans l'état électronique de base de la réaction de synthèse, **en ce que** la réaction de synthèse est une réaction entraînée thermiquement et **en ce que** l'optimisation du rendement permet d'obtenir, dans un intervalle de temps prédéterminé, au moins 10 % de plus d'un produit (3) souhaité que dans le cas d'une exécution non optimisée en rendement de la réaction.

2. Procédé selon la revendication 1, **caractérisé en ce que** l'excitation vibratoire de l'éduit (1) augmente le rendement d'un produit (3) souhaité et/ou diminue le rendement d'un produit non souhaité.

3. Procédé selon la revendication 1 ou 2, **caractérisé en ce que** les impulsions de lumière infrarouge sont produites par une source de lumière non cohérente.

4. Procédé selon la revendication 1 ou 2, **caractérisé en ce que** les impulsions de lumière infrarouge sont générées par un laser.

5. Procédé selon l'une quelconque des revendications précédentes, **caractérisé en ce que** les impulsions de lumière infrarouge ne présentent pas de modulation de phase.

6. Procédé selon l'une quelconque des revendications précédentes, **caractérisé en ce que** les impulsions de lumière infrarouge présentent une largeur spectrale inférieure à 50 cm-'.

7. Procédé selon l'une quelconque des revendications précédentes, **caractérisé en ce que** les impulsions de lumière infrarouge présentent une longueur d'impulsion d'au moins 100 fs et d'au plus 10 ps.

8. Procédé selon l'une quelconque des revendications précédentes, **caractérisé en ce que** les impulsions de lumière infrarouge excitent tout d'abord un catalyseur au moyen d'une excitation vibratoire par un processus à un seul photon, le catalyseur cédant ensuite au moins une partie de l'énergie qui lui est transmise à l'éduit (1).

9. Procédé selon l'une quelconque des revendications précédentes, **caractérisé en ce que** l'excitation vibratoire de l'éduit (1) est effectuée indirectement par relaxation vibratoire inter- et/ou intramoléculaire.

10. Procédé selon l'une quelconque des revendications précédentes, **caractérisé en ce que,** dans un délai allant jusqu'à une nanoseconde après l'absorption d'énergie, une pseudo-température est atteinte dans le produit de départ (1), qui est supérieure d'au moins 30 % à la température dans l'éduit (1) avant l'apport d'énergie par les impulsions de lumière infrarouge.

11. Procédé selon l'une quelconque des revendications précédentes, **caractérisé en ce que** plusieurs impulsions de lumière infrarouge superposées sont utilisées, qui se distinguent les unes des autres par au moins un paramètre, notamment par leur longueur d'onde moyenne.

12. Procédé selon l'une quelconque des revendications précédentes, **caractérisé en ce que** le produit dont le rendement est optimisé est un antibiotique, une substance naturelle ou un médicament, la réaction chimique étant une réaction entraînée thermiquement.

13. Procédé selon l'une quelconque des revendications précédentes, **caractérisé en ce que,** lors de l'excitation vibratoire, au moins deux molécules d'éduit sont associées entre elles par des liaisons physiques et/ou chimiques.

14. Procédé selon l'une quelconque des revendications précédentes, **caractérisé en ce que** l'excitation vibratoire conduit à une accélération de la réaction chimique en comparaison d'une réaction sans excitation vibratoire.

15. Utilisation d'impulsions de lumière infrarouge ayant une longueur d'onde moyenne dans la plage de 2 000 à 100 000 nm pour l'excitation vibratoire d'un éduit (1) par un processus à un seul photon,
- les impulsions de lumière infrarouge présentant une longueur d'onde fixe,
- la réaction chimique étant une réaction de synthèse lors de laquelle un produit (3) est formé, dont la formule brute ne correspond pas à la formule brute de l'éduit (1) et
- l'excitation vibratoire ne résultant pas en majeure partie en un chauffage thermique de l'éduit,
- les impulsions de lumière infrarouge provoquant une excitation vibratoire induite par la lumière infrarouge d'une coordonnée de réaction directe ou indirecte dans l'état électronique de base de la réaction de synthèse,
- la réaction de synthèse étant une réaction entraînée thermiquement et
- l'optimisation du rendement permettant d'obtenir, dans un intervalle de temps prédéterminé, au moins 10 % de plus d'un produit (3) souhaité que dans le cas d'une exécution non optimisée en rendement de la réaction.
